# EUROPÄISCHE PATENTSCHRIFT

(11) **EP 1 046 971 B1**
(45) Veröffentlichungstag und Bekanntmachung des Hinweises auf die Patenterteilung: **23.04.2008**
(21) Anmeldenummer: 99121612.8
(22) Anmeldetag: 29.10.1999
(51) Int. Cl.: G05B 19/042

(54) **Elektronische Steuereinrichtung**
Electronic control device
Dispositif de commande électronique

(30) Priorität: 19.04.1999 DE 29906955 U
(43) Veröffentlichungstag der Anmeldung: 25.10.2000
(73) Patentinhaber: PHOENIX CONTACT GmbH & Co. Kg, 32825 Blomberg (DE)
(72) Erfinder: Schaper, Elmar, 32676 LÜGDE (DE); Doellerer, Frank, 31789 Hameln (DE); Schürgens, Detlef, 32825 Blomberg (DE); Ragaller, Matthias, 33175 Bad Lippspringe (DE)
(74) Vertreter: Blumbach - Zinngrebe

(56) Entgegenhaltungen:
- EP-A- 0 592 927
- WO-A-98/37622
- US-A- 5 602 708
- US-A- 5 875 087

## Beschreibung

Die Erfindung betrifft eine elektronische Steuereinrichtung nach dem Oberbegriff des Anspruchs 1.

Die gemäß der Erfindung angesteuerten Armaturen werden insbesondere in Kraftwerksanlagen vielfältig verwendet, um beispielsweise Schieber, Absperreinrichtungen oder Ventile zu betätigen, deren Ausfall erhebliche Schäden an zugehörigen Maschinen oder gar Gefährdungen der Bediener oder der Umwelt nach sich ziehen können. Folglich kommt dem Betrieb derartiger Einrichtungen sowie der Erfassung und der Vermeidung von Ausfällen der Armaturen eine stark erhöhte Bedeutung zu.

Bei herkömmlichen Steuereinrichtungen für derartige Armaturen wurden bisher Bimetallkontakte verwendet, um gegenüber den normalen Betriebszuständen angestiegene elektrische Versorgungsleistungen zu erfassen und zu begrenzen. Da jedoch zur Erwärmung derartiger Bimetallkontakte bestimmte Mindesterwärmzeiten nötig sind, welche jedoch viel zu lange sein können, um Schäden an den Antriebseinheiten oder den angetriebenen Armaturen zu verhindern, bringt dieses Abschaltverhalten häufig Probleme mit sich. Ferner sind derartige Kontakte, selbst wenn diese für manche Anwendungen ein optimales Steuerverhalten bereitstellen, einem Verschleiß unterworfen, welcher deren Schaltverhalten in der Regel negativ beeinflusst.

Häufig ist auch das reine Ab- und Anschalten einer Antriebseinheit nicht ausreichend, um allen sicherheitstechnischen Anforderungen zu genügen und es wäre wünschenswert, wenn ein differenzierteres Steuerverhalten den jeweils gegebenen Anforderungen anpassbar wäre.

Aus US-Patent 5,875,087 ist ein digital gesteuerter Stromunterbrecher bekannt, welcher einen konventionellen thermischen Stromunterbrecher enthält, der auch durch einen digital gesteuerten Elektromagnet geschaltet werden kann. Der Stromunterbrecher weist eine Schnittstelle zum Anschluß an einen externen Rechner, beispielsweise eine serielle Verbindung zum Anschluß an ein Laptop auf, um Betriebsparameter verändern zu könnten. Es ist demgemäß eine weitere externe Einheit notwendig, um dem Stromunterbrecher Betriebsparameter zu übegeben.

Der Erfindung liegt die Aufgabe zu Grunde, eine elektronische Steuereinrichtung gemäß dem Oberbegriff des Anspruchs 1 dahingehend weiterzubilden, dass die vorstehenden Nachteile vermieden werden und insbesondere stets ein flexibles und sehr sicheres Steuerverhalten ermöglicht wird.

Diese Aufgabe wird bei einer gattungsgemäßen Steuereinrichtung auf überraschend einfache Weise dadurch gelöst, dass der zumindest eine Leistungsschalter für die Steuerung des elektrischen Antriebs der Armatur durch eine elektronische Rechnerbaugruppe angesteuert ist, welche innerhalb des Gehäuses der Steuereinrichtung angeordnet ist und welcher Parametrisierungsdaten für die Ansteuerung des elektrischen Antriebs der Armatur zuführbar sind. Hierdurch ist ein sehr genaues Steuerverhalten in Abhängigkeit von den eingegebenen Parametrisierungsdaten möglich und es tritt im wesentlichen keine zeitliche Abnutzung der Steuereinrichtung auf.

Eine manuelle Parametrisierung wird bei einer kostengünstigen Steuereinrichtung dadurch erreicht, dass der Rechnerbaugruppe mittels am Gehäuse angebrachter Betätigungseinrichtungen Parametrisierungsdaten für die Ansteuerung des elektrischen Antriebs der Armatur zuführbar sind.
Unter Verwendung einer externen Steuereinrichtung, wie beispielsweise einem Personalcomputer oder einer Bus-Anschaltbaugruppe können der Rechnerbaugruppe in besonders vorteilhafter Weise mittels einer Schnittstelleneinrichtung Parametrisierungsdaten für die Ansteuerung des elektrischen Antriebs der Armatur zugeführt werden und sind erfasste Daten ausles- und übertragbar.

Hierbei können Momentanwerte der abgegebenen Leistung, insbesondere der Wirksleistung durch eine Leistungsmesseinrichtung erfasst und mit zugeordneten Sollwerten verglichen werden.

Erfindungsgemäß ist es jedoch auch möglich, daß die Steuereinrichtung eine Einrichtung zum Erfassen von zumindest einer elektrischen Größe aufweist, mittels derer die an den Antrieb abgegebene Leistung, insbesondere die Wirkleistung ermittelt, beispielsweise von der Rechnerbaugruppe berechnet wird.

Die Erfassung der Wirkleistung ist beispielsweise besonders vorteilhaft bei gering belasteten Antriebsmaschinen, da hier die Stromvariation verhältnismäßig gering ist. In einem derartigen Fall verändert sich bei einer Laständerung im wesentlichen der Phasenwinkel, somit stellt die Auswertung der aufgenommen Wirkleistung einen noch effektiveren Maschinen- und Anlagenschutz dar als die reine Betrachtung des Motorstromes oder der Scheinleistung.

Durch eine Speichereinrichtung, mittels welcher die erfasste Größe, insbesondere die an den Antrieb abgegebene Leistung, zeit- und/oder wegabhängig speicherbar ist können Abläufe dokumentiert werden oder Bewegungsdaten der Rechnerbaugruppe zwischengespeichert werden. Vorteilhaft sind in der Speichereinrichtung auch Soll-Kennlinien des Antriebs weg- und/oder zeitabhängig abgelegt.

In weiterer bevorzugter Ausgestaltung sind aus der erfassten, an den Antrieb abgegebenen Leistung mittels der Rechnereinrichtung Drehmomentwerte des Antriebs errechenbar, wobei die Drehmomentwerte in der Speichereinrichtung ablegbar und mit Soll-Kennlinien des Antriebs weg- und/oder zeitabhängig vergleichbar sind. Dabei ist dem Fachmann wohlbekannt, dass das Drehmoment von der an den Antrieb abgegebenen Leistung, insbesondere der Wirkleitung abhängig ist.

In weiterer bevorzugter Ausgestaltung sind in der Speichereinrichtung Steuerdaten für Spannungs- und/oder Stromverläufe abgelegt, mittels welchen ein stetiges, insbesondere ruckfrei verlaufendes Anlaufen und/oder Abbremsen des Antriebs ermöglicht ist.

Ein besonders sicheres Verhalten ergibt sich ferner dadurch, dass durch die Rechnereinrichtung unter Verwendung der in der Speichereinrichtung abgelegten Daten erhöhte Drehmomentwerte erfassbar sind und bei erhöhtem Drehmoment oberhalb eines vordefinierten Schwellenwertes ein Anlaufen mit vorhergehendem Rücklauf und erneutem Anlaufen auslösbar ist, wobei ein Wiedereinschalten nach Auslösen bei überhöhtem Drehmoment nicht zulässig ist.

Ist mittels der Rechnerbaugruppe unter Verwendung der in der Speichereinrichtung abgelegten Daten ein geschwindigkeitsabhängiges Brems- und Beschleunigungsverhalten errechenbar, durch welches insbesondere bei jeder Geschwindigkeit sowohl ein sicheres Anhalten des Antriebs als auch ein Verfahren des Antriebs in eine vordefinierte Sicherheitsstellung bewirkbar ist, kann unabhängig vom Bewegungszustand des Antriebs der Armatur eine Sicherheitsabschaltung jederzeit und mit geringem Zeitaufwand bewirkt werden.

Ganz allgemein können durch Ansprechen auf einen Vergleich unter Berücksichtigung einer abgespeicherten Sollkennlinie und zumindest eines Momentanwertes einer erfassten elektrischen Größe des Antriebs durch die Rechnerbaugruppe beliebige Betriebs-, Sicherheits- und/oder Wartungsfunktionen ausgelöst werden. Die betrifft beispielsweise die Not-Abschaltung des Antriebs über ein Lastrelais, die Signalisierung eines Alarms, aber auch die Signalisierung des Auftretens eines Verschleisses eines Werkzeuges, welcher mit der Messung der Wirkleistung erfassbar ist.

Um eine besonders kompakte Bauform der Steuereinrichtung zu verwirklichen kann die Steuereinrichtung in einem einzigen Gehäuse angeordnet sein, an dessen Unterseite sich Kühlreinrichtungen und Befestigungseinrichtungen zur Befestigung der Steuereinrichtung befinden.

Die erfindungsgemäße Steuereinrichtung stellt einen optimaler Motor- und Anlagen- bzw. Maschinenschutz für viele Bereiche der Bearbeitungsmaschinen, in der Förder- / Transporttechnik und in weiten Bereichen der Verfahrenstechnik bereit.

Die Erfindung wird nachfolgend anhand bevorzugter Ausführungsformen und unter Bezugnahme auf die beigefügten Zeichnungen detaillierter beschrieben.
Es zeigen:
- Fig. 1: eine perspektivische Ansicht des Gehäuses einer ersten Ausführungsform der elektronischen Steuereinrichtung mit integriertem Armaturenschutz,
- Fig. 2: ein Blockschaltbild der elektronischen Baugruppen der Steuereinrichtung,
- Fig. 3: die Auslösecharakteristik einer Bimetallkontakt-Steuereinrichtung für die Abschaltung im Überlastfall,
- Fig. 4: die Auslösecharakteristik der erfindungsgemäßen Steuereinrichtung,
- Fig. 5: einen erfassten Wirkleistungverlauf einer Stellarmatur, der von einer erfindungsgemäßen Steuereinrichtung gesteuert wird.
- Fig. 6: eine erfasste Wirkleistungskurve für einen Fräser, der von einer erfindungsgemäßen Steuereinrichtung gesteuert wird.

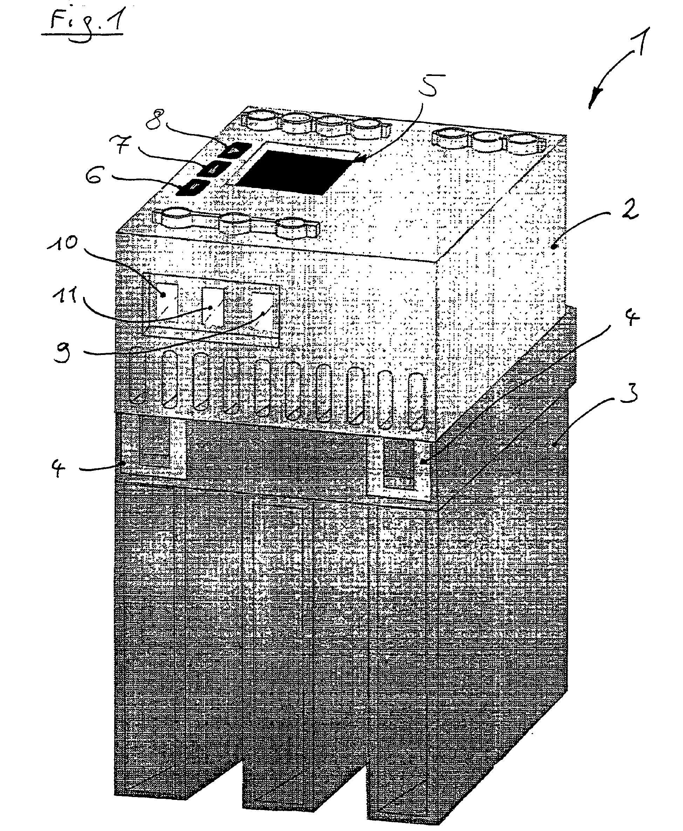

Es wird zunächst auf Fig. 1 Bezug genommen, in welcher die perspektivische Darstellung der im Ganzen mit 1 bezeichneten erfindungsgemäßen elektronischen Steuereinrichtung gezeigt ist. Das dielektrische Gehäuse 2 ist an dem Kühlkörper 3 mit Rastclipsen 4 sicher gehalten.

Auf der Oberseite des Gehäuses 2 ist eine Anzeigeeinrichtung 5 und sind neben dieser Folientaster 6, 7, 8 angeordnet, mittels welchen Parametrisierungsdaten, die an der Anzeigeeinrichtung 5 darstellbar sind, eingegeben werden können.

An der Frontseite des Gehäuses 2 befinden sich Öffnungen 9, 10, 11 zur Aufnahme von Anschlussleitungen zu den nicht dargestellten Antriebseinrichtungen einer elektrisch angetriebenen Armatur, wie diese beispielsweise bei Kraftwerken eingesetzt werden. In den Öffnungen 9, 10, 11 befinden sich dem Fachmann auf diesem Gebiet bekannte Anschlusseinrichtungen zur Festverdrahtung der Anschlussleitungen.

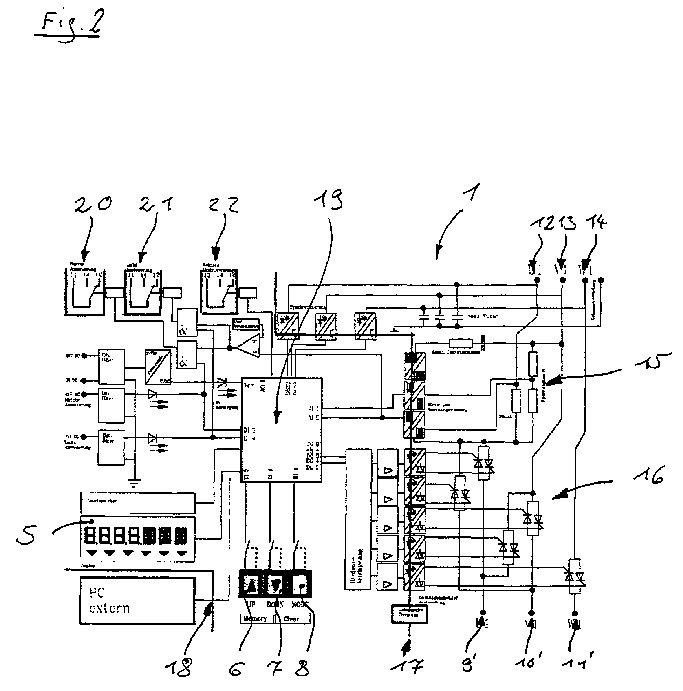

Nachfolgend wird auf Fig. 2 Bezug genommen, in welcher in einem Blockschaltbild die wesentlichen elektronischen Baugruppen der Steuereinrichtung 1 dargestellt sind.

Mit den Bezugszeichen 12, 13, 14 ist ein 3-Phasen-Wechselstromanschluss bezeichnet, der vorzugsweise an das elektrische Versorgungsnetz eines öffentlichen Betreibers angeschlossen ist.

Mit dem Bezugszeichen 15 versehen ist eine Strom- und Spannungsmesseinrichtung, vermittels welcher die jeweilige Leistung der einzelnen Phasen der Wechselstromversorgung separat erfassbar ist.

Vermittels der, vorzugsweise als Thyristoren ausgebildeten Leistungshalbleiterschalter kann eine Phasenanschnittsteuerung sowie durch Umschalten der Phasen eine Drehrichtungsumkehr des Drehsinns des an den Anschlusseinrichtungen 9', 10', 11' abgegebenen Wechselstroms bewirkt werden.

Sowohl die Strom- und Spannungsmesseinrichtung 15 als auch die Leistungshalbleiterschalter 16 sind durch eine galvanische Trenneinrichtung 17, welche beispielsweise durch Übertrager oder Optokoppler realisiert wird, entkoppelt.

Mittels einer Schnittstelleneinrichtung 18 ist die elektronische Steuereinrichtung 1 an externe Kommunikationseinrichtungen, wie beispielsweise einen Feldbus angeschlossen.

Bei einer besonders bevorzugten Ausführungsform ist die elektronische Steuereinrichtung 1 als Interbus-Baugruppe ausgebildet und kann entweder direkt mit dem seriellen Bus des Interbus oder mit einer Busanschaltungsbaugruppe kommunizieren. In alternativer Ausgestaltung kann die Schnittstelle 18 mit einem externen Personalcomputer, PC, verbunden sein, der mit der Steuereinrichtung kommuniziert.

Sowohl die Schnittstelleneinrichtung 18 als auch die Anzeigeeinrichtung 5 und die Folientaster 6, 7, 8 sind mit einer Rechnerbaugruppe 19 verbunden, welche über einen Mikroprozessor sowie die benötigten On-Chip-Speichereinrichtungen für den erfindungsgemäßen Betrieb verfügt.

Die Rechnerbaugruppe 19 ist ebenfalls an Relaisbaugruppen 20, 21 und 22 angeschlossen, mittels welchen externe Schalt- oder Meldevorgänge bewirkbar sind. Beim Überschreiten eines in dem Speicher der Rechnerbaugruppe 19 abgelegten Sollwertes um einen vordefinierten Schwellenwert kann beispielsweise mittels des Relais 22 eine Meldung über ein Absteuerversagen signalisiert werden.

Derartige, der Erkennung eines Absteuerversagens zu Grunde liegende Kennliniendaten können mittels der Folientaster 6, 7, 8 oder über die Schnittstelleneinrichtung 18 in der Speichereinrichtung der Rechnerbaugruppe 19 abgelegt werden. Diese Parametrisierungsdaten können im einfachsten Falle konstante Maximalwerte des Drehmoments oder der abgegebenden Leistung sein, bei deren Überschreitung ein Abschaltvorgang vorgenommen wird oder es kann in weiterer erfindungsgemäßer Ausgestaltung die an den Antrieb abgegebene Leistung zeit- oder wegabhängig frei vorgegeben und abgespeichert sein.

Durch entsprechende Sollwertvorgaben kann der Antrieb ferner derart gesteuert werden, dass es zu einem weichen und ruckfreien Anlaufen bzw. Abbremsen kommt. Zu diesem Zweck sind die entsprechenden Kennlinien des Antriebs weg- und/oder zeitabhängig in der Speichereinrichtung abgelegt. Die von der Strom- und Spannungsmesseinrichtung erfassten Daten und von der Rechnerbaugruppe 19 in Leistungs- oder Drehmomentwerte umgerechneten Größen können jeweils momentan oder bestimmten Wegpunkten zugeordnet mit beliebigen abgespeicherten Kennlinien ausgewählter elektrischer Antriebe verglichen werden. Hierzu liegt es im Rahmen der Erfindung für bestimmte Antriebsklassen Normvorgabewerte vorzudefinieren.

Auf diese Weise kann ausgeschlossen werden, dass kostenintensive und sicherheitskritische Armaturen beschädigt oder zerstört werden und selbst falls es während des Betriebs der Armatur zu schleichenden Veränderungen kommt, kann ein Verschleiß des Antriebs oder der angetriebenen Armatur meistens durch erhöhte Reibungswerte erkannt und ein Ausfall noch vor seinem Auftreten verhindert werden.

In besonders vorteilhafter Weise kann beim Erreichen eines zu hohen Drehmomentwertes ein sanft verlaufendes Anhalten des Antriebs vorgenommen werden, kann dieser in den Rücklauf gesteuert werden und können daraufhin programmgesteuert ein Abschalten oder ein oder mehrere erneute Anläufe vorgenommen werden.

In besonders bevorzugter erfindungsgemäßer Ausgestaltung ist die gesamte elektronische Steuereinrichtung 1 in einem einzigen Gehäuse 2 untergebracht, wobei das Gehäuse 2 über weitere in den Figuren nicht dargestellte Schnittstelleneinrichtungen, wie beispielsweise optische Verbinderbaugruppen für Lichtwellenleiter verfügen kann.

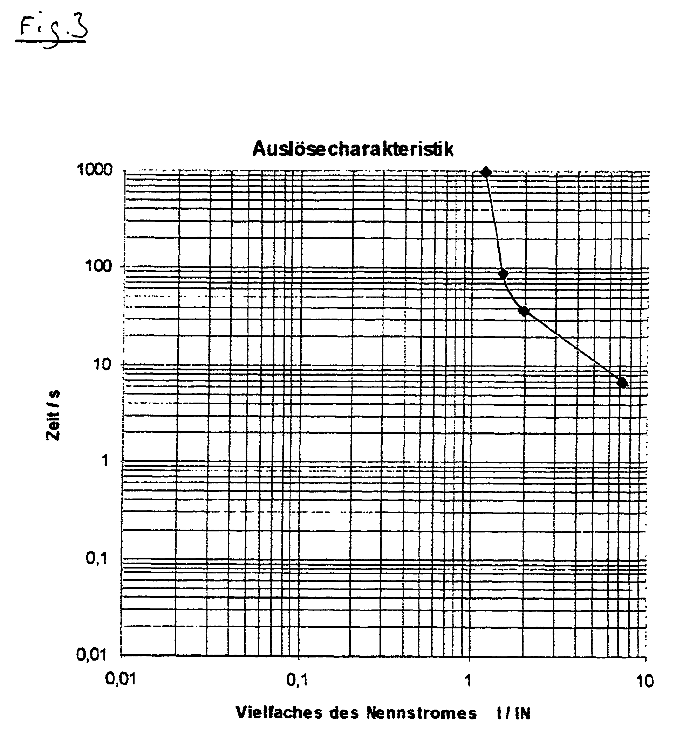

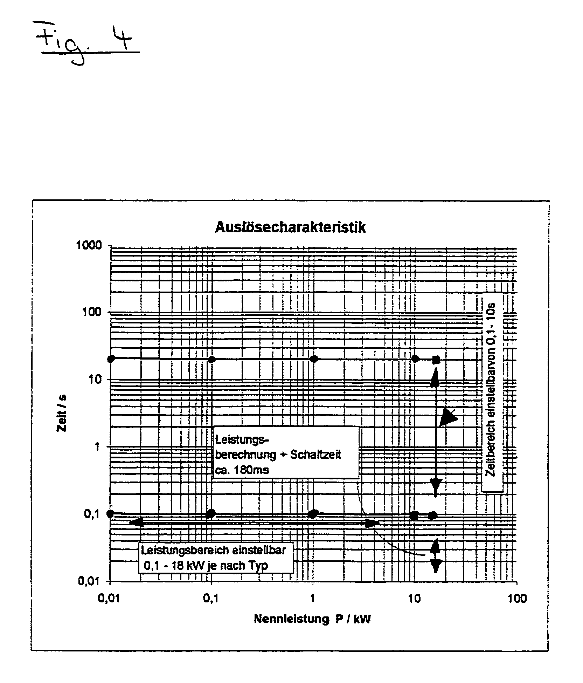

Zur Demonstration der erfindungsgemäßen Vorteile wird nachfolgend auf die Figuren 3 und 4 verwiesen. Fig. 4 zeigt die eingangs erwähnte nachteilige zeitabhängige Auslösecharakteristik eines herkömmlichen Bimetallschaltes. Es ist deutlich zu erkennen, dass die benötigte Schaltzeit abhängig vom Nennstrom ist, und nur für sehr hohe Nennstromwerte kurze Abschaltzeiten erreichbar sind.

Demgegenüber ist in Fig. 4 das von der Nennleistung vollständig unabhängige Schaltverhalten der erfindungsgemäßen elektronischen Steuereinrichtung gezeigt, bei welcher für die Leistungsberechnung mittels der Rechnerbaugruppe 19 zusammen mit der Schaltzeit der Leistungshalbleiterschalter weniger als 200 mS an Zeit vergeht, bevor es zu einer Abschaltung kommt. In besonders vorteilhafter Ausgestaltung sei hierbei erwähnt, dass um ein erhöhtes Bremsdrehmoment zu erzeugen, auch die Beaufschlagung des Antriebs mit gegenphasiger elektrischer Leistung, mit elektrischer Leistung, die dazu tendiert, den Antrieb nach rückwärts zu drehen, möglich ist. Hierdurch kann es in einem wählbaren Leistungsbereich in Abhängigkeit der zu regelnden elektrischen Leistung zu sehr schnellen und folglich sehr sicheren Abschaltvorgängen kommen, die eine Zerstörung oder Beschädigung der angesteuerten Armatur sicher verhindern.

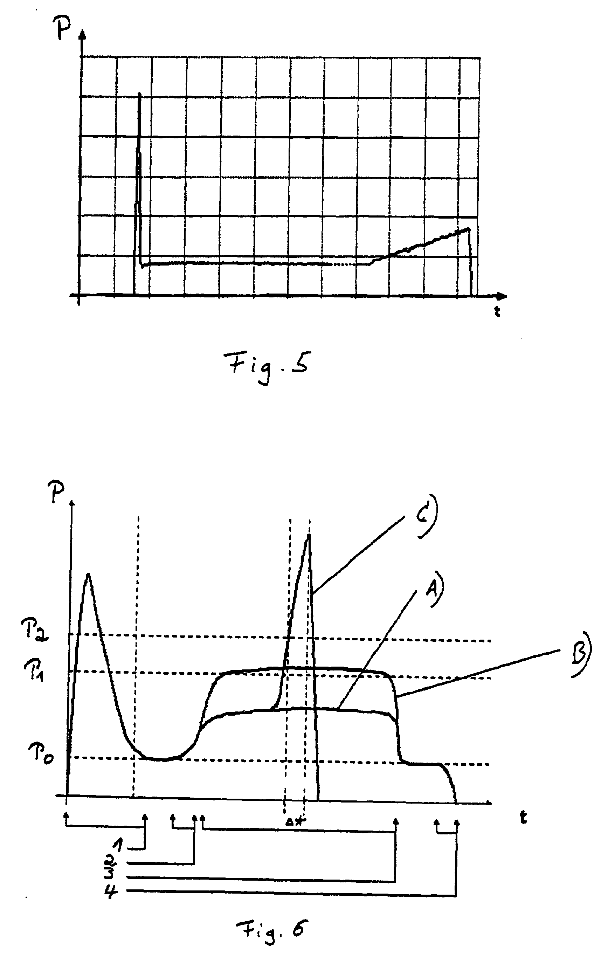

Den gemessenen Wirkleistungsverlauf beim Schließen einer Stellarmatur zeigt Fig. 5. Eine beispielhafte erfindungsgemäße elektronische Steuereinrichtung erfasst die drei Strömen, Spannungen und dem Phasenwinkel des Antriebs der Stellarmatur und berechnet die Wirkleistungsaufnahme des Antriebes. Alle 20 ms wird ein Leistungswert ermittelt und ermöglicht so eine kontinuierlichen Zustandsüberwachung. Fig. 5 zeigt einen typischen Wirkleistungsverlauf beim Schließen der Stellarmatur. Der kritische Punkt dieser Fahrkurve ist das Absteuern. Versagt hier ein mechanischer Drehmomentschalter führt das zur mechanischen Zerstörung der Armatur. Genau dieser Bereich muß daher überwacht werden. Dazu wird der obere Leistungsschwellwert kurz über den Auslösepunkt des Drehmomentschalters gelegt und ein optimaler Schutz der kostenintensiven Armatur ist realisiert. Innerhalb von ca. 40 ms schaltet die Rechnerbaugruppe mittels eines Lastrelais die Antriebsmaschine ab und signalisiert diesen Zustand über einen Meldeausgang. Optional kann die kinetische Energie (Nachlaufen) des Motors mit einem zeitlich einstellbaren Reversierimpuls, welcher ein Wende-Lastrelais ansteuert, schlagartig abgebaut werden.
Parallel zur Überwachungsfunktion werden im einem Datenspeicher-Modus permanent die Leistungswerte der letzten Fahrkurve abgelegt und stehen für Störungsanalysen oder eine zyklische Zustandsbeurteilung des Stellantriebes zur Verfügung. Der Leistungswert beim Motoranlauf liegt deutlich oberhalb der Schutzschwelle und darf bei der Überwachung nicht berücksichtigt werden. Dazu wird über den Anlaufbereich ein zeitlich variables Fenster gelegt, wodurch die Überwachung temporär ausgesetzt, d.h. verzögert wird. Über eine RS232-Schnittstelle können sämtliche Parameter des Lastrelais auch z.B. über ein Notebook eingestellt werden. Zusätzlich ist hier ein Lern-Modus implementiert, der die Aufnahme von Leistungskurven unterschiedlichster Arbeitsvorgänge ermöglicht. Die Kurvenverläufe werden am Monitor ausgewertet und die notwendigen Schalt- und Meldeschwellen festgelegt. Weiterhin ist es bei der beschriebenen Ausführungsform der Erfindung zusätzlich zum obebeschriebenen Lern-Modus wird ein "Compare"-Modus implementiert. Dabei kann über den aufgezeichneten Leistungsverlauf eine "Schlauchkurve" gelegt werden. Dieses parametrierbare Toleranzband kann permanent überwacht und mit den ermittelten Ist-Werten verglichen werden. Auf das Verlassen dieses Bandes reagiert die erfindungsgemäße Steuereinrichtung mit einer Meldung oder der beschriebenen Schnellabschaltung.
Bild 6 zeigt die typische Wirkleistungskurve eines Fräs- oder Bohrers, welcher mittels einer anderen beipielhaften elektronischen Steuereinrichtung angesteuert wird. Auf die ermittelte Wirkleistungskurve wird wie folgt mittels der vorstehend beschriebenen Eingabeeinrichtungen parametriert. Der Motoranlauf (Bereich 1) wird nicht berücksichtigt und wird deshalb mit der Zeitverzögerungs-Unterdrückung von der Überwachung ausgeblendet. Im Bereich 2 wird das Werkzeug angesetzt, Bereich 3 beschreibt den eigentlichen Fräsvorgang und im Bereich 4 wird der Antrieb abgeschaltet. Der Normalzustand (Kurve A) wurde mit einem scharfen Fräs- oder Bohrwerkzeug ermittelt. Ein stumpfer Fräser bewirkt eine Leistungserhöhung (Kurve B). Auf diesen Wert P1 wurde eine Meldeschwelle gelegt, wobei P0 der Leerlaufleistung entspricht. Ein Überschreiten der Wirkleistung P1 wird dann automatisch von der Steuereinrichtung gemeldet, um einen notwendigen Werkzeugwechsel anzuzeigen. Eine extrem steile Leistungserhöhung, z.B. hervorgerufen durch einen falsch eingestellten Vorschub, kann einen Werkzeugbruch verursachen. Um diesen Bruch zu verhindern wird die Leistungsschwelle P2 gesetzt. Damit die erfindungsgemäße Steuereinrichtung nicht auf jeden kurzen Leistungspeak reagiert, ist hier eine Verzögerungszeit At eingestellt. Liegt der Leistungswert nach Ablauf der Verzögerungszeit weiterhin über dem Schwellwert, wird innerhalb weniger ms der Antrieb abgeschaltet. Am Meldeausgang wird dieser Zustand angezeigt und kann z.B. an eine übergeordnete Steuerung mittels einer Feldbusanschaltung weitergeleitet werden. Mittels einer derartige Feldbusanschaltung wird beispielsweise auch eine Online-Überwachung der elektronischen Steuereinrichtung bereitgestellt.

In einer weiteren Ausführungsform der Erfindung werden Pumpen mittels einer erfindungsgemäßen elektronischen Steuereinrichtung gesteuert und überwacht. Die oberen Meldeschwelle signalisiert beispielsweise Siebverunreinigungen und die Schaltschwelle unterbindet die Auswirkungen durch Verstopfungen. Eine untere Schaltschwelle - mit einer Zeitverzögerung etwas träger gestaltet - überwacht die Pumpe zusätzlich auf Trockenlauf. Auf einem Display des Gerätes sind ständig aktuelle Informationen zu Spannungen, Strömen, Phasenwinkel, Wirk- und Blindleistung, Netzfrequenz, sowie Phasenausfall oder Unsymmetrien verfügbar. Das erfindungsgemäße Gerät beinhaltet neben einem kompletten elektronischen Wende-Lastrelais die gesamte Überwachungs-, Schutz- und Meldefunktionalität, womit zusätzlichen Signallaufzeiten zu Steuerungen oder Leitsystemen entfallen, was ansonsten eine schnelle Reaktion verzögern würde.

### Bezugszeichen

- 1: elektronische Steuereinrichtung
- 2: dielektrisches Gehäuse
- 3: Kühlkörper
- 4: Rastclips
- 5: Anzeigeeinrichtung
- 6, 7, 8: Folientaster
- 9, 10, 11: Öffnungen
- 9',10',11': Anschlusseinrichtung
- 12, 13, 14: Anschluss an das Wechselstromnetz
- 15: Strom- und Spannungsmesseinrichtung
- 16: Leistungshalbleiterschalter
- 17: galvanische Entkopplung
- 18: Schnittstelleneinrichtung
- 19: Rechnerbaugruppe
- 20, 21, 22: Relaisbaugruppe

## Patentansprüche

1. Elektronische Steuereinrichtung mit integriertem Armaturenschutz, insbesondere für Kraftwerksanwendungen, umfassend zumindest einen Leistungsschalter zur Ansteuerung und Versorgung eines elektrischen Antriebs einer zu steuernden Armatur, wobei
der zumindest eine Leistungsschalter durch eine elektronische Rechnerbaugruppe angesteuert ist, welche innerhalb des Gehäuses der Steuereinrichtung angeordnet ist und welcher Parametrisierungsdaten für die Ansteuerung des elektrischen Antriebs der Armatur zuführbar sind, **gekennzeichnet durch** eine Speichereinrichtung, mittels welcher eine erfasste Größe, insbesondere die an den Antrieb abgegebene Leistung zeit- und/oder wegabhängig speicherbar ist und **durch** die Rechnerbaugruppe unter Verwendung der in der Speichereinrichtung abgelegten Daten erhöhte Drehmomentwerte erfassbar sind und bei erhöhtem Drehmoment oberhalb eines vordefinierten Schwellenwertes ein Anlaufen mit vorhergehendem Rücklauf und erneutem ruckfreiem Anlaufen auslösbar ist.

2. Elektronische Steuereinrichtung nach Anspruch 1,
**dadurch gekennzeichnet, dass** der Rechnerbaugruppe mittels am Gehäuse angebrachter Betätigungseinrichtungen Parametrisierungsdaten für die Ansteuerung des elektrischen Antriebs der Armatur zuführbar sind.

3. Elektronische Steuereinrichtung nach Anspruch 1 oder 2, **dadurch gekennzeichnet, dass** der Rechnerbaugruppe mittels einer Schnittstelleneinrichtung Parametrisierungsdaten für die Ansteuerung des elektrischen Antriebs der Armatur zuführbar sind.

4. Elektronische Steuereinrichtung nach Anspruch 1, 2 oder 3, **dadurch gekennzeichnet, dass** die Schnittstelleneinrichtung eine optische Schnittstelleneinrichtung mit am Gehäuse angeordneten zugehörigen Anschlusseinrichtungen für Lichtleiter-Übertragungseinrichtungen ist.

5. Elektronische Steuereinrichtung nach einem der vorstehenden Ansprüche, ferner **gekennzeichnet durch** eine Leistungsmesseinrichtung, mittels welcher die an den Antrieb abgegebene Leistung, insbesondere die Wirkleistung erfassbar ist.

6. Elektronische Steuereinrichtung nach einem der vorstehenden Ansprüche, **gekennzeichnet durch** wenigstens eine Einrichtung zum Erfassen von zumindest einer elektrischen Größe, mittels derer die an den Antrieb abgegebene elektrische Leistung, insbesondere die Wirkleistung ermittelbar ist.

7. Elektronische Steuereinrichtung nach Anspruch 6,
**dadurch gekennzeichnet, dass**
die Einrichtung zum Erfassen von zumindest einer elektrischen Größe zur Erfassung einer Spannung, einer Stromstärke und/oder einer Phase ausgebildet ist, wobei die Rechnerbaugruppe die ermittelten Werte empfängt und die an den Antrieb abgegebene Leistung, insbesondere die Wirkleistung berechnet.

8. Elektronische Speichereinrichtung nach einem der vorstehenden Ansprüche, **dadurch gekennzeichnet, dass** in der Speichereinrichtung Soll-Kennlinien des Antriebs weg- und/oder zeitabhängig abgelegt sind.

9. Elektronische Steuereinrichtung nach einem der vorstehenden Ansprüche, **gekennzeichnet durch** das Abspeichern einer Sollkennlinie für zumindest eine elektrischen Größe, wobei die Rechnerbaugruppe im Ansprechen auf einen Vergleich unter Berücksichtigung von zumindest einem Wert der Sollkennlinie und zumindest einem Momentanwert einer elektrischen Größe des Antriebs eine Betriebs-, Sicherheits- und/oder Wartungsfunktion auslöst.

10. Elektronische Steuereinrichtung nach einem der vorstehenden Ansprüche, **dadurch gekennzeichnet, dass** aus der erfassten, an den Antrieb abgegebenen Leistung mittels der Rechnereinrichtung Drehmomentwerte des Antriebs errechenbar sind, welche in der Speichereinrichtung ablegbar und mit Soll-Kennlinien des Antriebs weg- und/oder zeitabhängig vergleichbar sind.

11. Elektronische Steuereinrichtung nach einem der vorstehenden Ansprüche, **dadurch gekennzeichnet, dass** in der Speichereinrichtung Steuerdaten für Spannungs- und/oder Stromverläufe abgelegt sind, mittels welchen ein stetiges, insbesondere ruckfrei verlaufendes Anlaufen und/oder Abbremsen des Antriebs ermöglicht ist.

12. Elektrische Steuereinrichtung nach einem der vorstehenden Ansprüche, **dadurch gekennzeichnet, dass** mittels der Rechnerbaugruppe unter Verwendung der in der Speichereinrichtung abgelegten Daten ein geschwindigkeitsabhängiges Brems- und Beschleunigungsverhalten errechenbar ist, durch welches in jeder Geschwindigkeit sowohl ein sicheres Anhalten des Antriebs als auch ein Verfahren des Antriebs in eine vordefinierte Sicherheitsstellung bewirkbar ist.

13. Elektronische Steuereinrichtung nach einem der vorstehenden Ansprüche **dadurch gekennzeichnet, dass** die Steuereinrichtung in einem einzigen Gehäuse angeordnet ist, an dessen Unterseite sich Kühlreinrichtungen und Befestigungseinrichtungen zur Befestigung der Steuereinrichtung befinden.

14. Elektronische Steuereinrichtung nach einem der vorstehenden Ansprüche,
**gekennzeichnet, durch** ein
Mittel zur Drehrichtungsumkehr des Antriebs im Ansprechen auf ein Signal der Rechnerbaugruppe, welche das Signal nach dem Erkennen des Überschreitens oder Unterschreitens einer vorgegebenen Wirkleistungsschwelle auslöst.

15. Elektronische Steuereinrichtung nach einem der vorstehenden Ansprüche,
**dadurch gekennzeichnet, dass** die Rechnerbaugruppe beim Vergleich ferner eine vorgegebene Zeitverzögerung und/oder eine vorgegebene erlaubte Maximalabweichung berücksichtigt.

## Claims

1. Electronic control device with integrated fitting protection, in particular for power station applications, comprising at least one power switch for driving and supplying an electrical drive of a fitting which is to be controlled, wherein the at least one power switch is driven by an electronic computer assembly which is disposed inside the housing of the control device and which can be supplied with parameterisation data for driving the electrical drive of the fitting, **characterised by** a memory device, by means of which a recorded variable, in particular the power which is output to the drive can be stored in a time- and/or path-dependent manner, and by virtue of the computer assembly using the data stored in the memory device increased torque values can be recorded and in the event of increased torque above a predefined threshold value a start-up including previous reverse running and a renewed smooth start-up can be triggered.

2. Electronic control device as claimed in claim 1, **characterised in that** the computer assembly can be supplied by means of actuating devices, which are mounted on the housing, with parameterisation data for driving the electrical drive of the fitting.

3. Electronic control device as claimed in claim 1 or 2, **characterised in that** the computer assembly can be supplied by means of an interface device with parameterisation data for driving the electrical drive of the fitting.

4. Electronic control device as claimed in claim 1, 2 or 3, **characterised in that** the interface device is an optical interface device having associated connection devices, which are disposed on the housing, for optical fibre transmission devices.

5. Electronic control device as claimed in any one of the preceding claims, further **characterised by** a power measuring device which is used for the purpose of recording the power, in particular the real power, which is output to the drive.

6. Electronic control device as claimed in any one of the preceding claims, **characterised by** at least one device for recording at least one electrical variable which is used to determine the electrical power, in particular the real power, which is output to the drive.

7. Electronic control device as claimed in claim 6, **characterised in that** the device for recording at least one electrical variable is formed for recording a voltage, an intensity of current and/or a phase, wherein the computer assembly receives the values determined and calculates the power, in particular the real power, which is output to the drive.

8. Electronic memory device as claimed in any one of the preceding claims, **characterised in that** nominal characteristic curves of the drive are stored in the memory device in a path- and/or time-dependent manner.

9. Electronic control device as claimed in any one of the preceding claims, **characterised by** the storage of a nominal characteristic curve for at least one electrical variable, wherein the computer assembly triggers an operating, safety and/or maintenance function in response to a comparison taking into consideration at least one value of the nominal characteristic curve and at least one instantaneous value of an electrical variable of the drive.

10. Electronic control device as claimed in any one of the preceding claims, **characterised in that** the computer device can use the recorded power which is output to the drive to calculate torque values of the drive which can be stored in the memory device and can be compared with nominal characteristic curves of the drive in a path- and/or time-dependent manner.

11. Electronic control device as claimed in any one of the preceding claims, **characterised in that** stored in the memory device are control data for voltage and/or current progressions which enable the drive to be started-up and/or braked in a steady, in particular smooth manner.

12. Electrical control device as claimed in any one of the preceding claims, **characterised in that** the computer assembly uses the data stored in the memory device to calculate a speed-dependent braking and acceleration behaviour, by means of which at any speed the drive can both be stopped in a reliable manner and moved to a predefined safety position.

13. Electronic control device as claimed in any one of the preceding claims, **characterised in that** the control device is disposed in a single housing, on the underside of which are located cooling devices and attachment devices for attaching the control device.

14. Electronic control device as claimed in any one of the preceding claims, **characterised by** a means for reversing the direction of rotation of the drive in response to a signal from the computer assembly which triggers the signal after it has been recognised that a predetermined real power threshold has been exceeded or has not been achieved.

15. Electronic control device as claimed in any one of the preceding claims, **characterised in that** during the comparison the computer assembly also takes into consideration a predetermined time delay and/or a predetermined permitted maximum deviation.

## Revendications

1. Dispositif de commande électronique comprenant une protection d'armature intégrée, en particulier pour des applications de centrale, comprenant au moins un disjoncteur pour l'activation et l'alimentation d'un entraînement électrique d'une armature à commander,
le, au moins un, disjoncteur étant activé par un ensemble d'ordinateur électronique, qui est disposé à l'intérieur du boîtier du dispositif de commande et auquel peuvent être amenées des données de paramétrage pour l'activation de l'entraînement électrique de l'armature, **caractérisé par** un dispositif de mémoire, au moyen duquel une grandeur enregistrée, en particulier la puissance envoyée à l'entraînement, peut être stockée en fonction du temps et/ou de la course, et des valeurs de couple élevées peuvent être enregistrées par l'ensemble d'ordinateur en utilisant les données déposées dans le dispositif de mémoire, et un démarrage avec une marche arrière précédente et un nouveau démarrage sans à-coups peuvent être déclenchés avec un couple élevé au-dessus d'une valeur seuil prédéfinie.

2. Dispositif de commande électronique selon la revendication 1, **caractérisé en ce que** des données de paramétrage pour l'activation de l'entraînement électrique de l'armature peuvent être amenées à l'ensemble d'ordinateur au moyen de dispositifs d'actionnement placés sur le boîtier.

3. Dispositif de commande électronique selon la revendication 1 ou 2, **caractérisé en ce que** des données de paramétrage pour l'activation de l'entraînement électrique de l'armature peuvent être amenées à l'ensemble d'ordinateur au moyen d'un dispositif d'interface.

4. Dispositif de commande électronique selon la revendication 1, 2 ou 3, **caractérisé en ce que** le dispositif d'interface est un dispositif d'interface optique avec des dispositifs de raccordement spécifiques disposés sur le boîtier pour des dispositifs de transmission par fibres optiques.

5. Dispositif de commande électronique selon l'une des revendications précédentes, **caractérisé** également par un dispositif de mesure de puissance, au moyen duquel la puissance envoyée à l'entraînement, en particulier la puissance réelle, peut être enregistrée.

6. Dispositif de commande électronique selon l'une des revendications précédentes, **caractérisé par** au moins un dispositif pour l'enregistrement d'au moins une grandeur électrique au moyen de laquelle la puissance électrique fournie à l'entraînement, en particulier la puissance réelle, peut être déterminée.

7. Dispositif de commande électronique selon la revendication 6, **caractérisé en ce que** le dispositif pour l'enregistrement d'au moins une grandeur électrique est réalisé pour l'enregistrement d'une tension, d'une intensité de courant et/ou d'une phase, l'ensemble d'ordinateur recevant les valeurs déterminées et calculant la puissance fournie à l'entraînement, en particulier la puissance réelle.

8. Dispositif de mémoire électronique selon l'une des revendications précédentes, **caractérisé en ce que** des lignes caractéristiques de consigne de l'entraînement sont déposées en fonction de la course et/ou du temps dans le dispositif de mémoire.

9. Dispositif de commande électronique selon l'une des revendications précédentes, **caractérisé par** le stockage d'une ligne caractéristique de consigne pour au moins une grandeur électrique, l'ensemble d'ordinateur déclenchant une fonction d'exploitation, de sécurité et/ou de maintenance en réaction à une comparaison compte tenu d'au moins une valeur de la ligne caractéristique de consigne et d'au moins une valeur momentanée d'une grandeur électrique de l'entraînement.

10. Dispositif de commande électronique selon l'une des revendications précédentes, **caractérisé en ce que** des valeurs de couple de l'entraînement peuvent être calculées à partir de la puissance enregistrée et fournie à l'entraînement au moyen du dispositif d'ordinateur, lesquelles valeurs peuvent être déposées dans le dispositif de mémoire et peuvent être comparées avec des lignes caractéristiques de consigne de l'entraînement en fonction de la course et/ou du temps.

11. Dispositif de commande électronique selon l'une des revendications précédentes, **caractérisé en ce que** des données de commande pour des courbes de tension et/ou de courant sont déposées dans le dispositif de mémoire, données au moyen desquelles un démarrage et/ou un freinage constant de l'entraînement, en particulier s'effectuant sans à-coups, est rendu possible.

12. Dispositif de commande électrique selon l'une des revendications précédentes, **caractérisé en ce qu'**un comportement au freinage et à l'accélération dépendant de la vitesse peut être calculé au moyen de l'ensemble d'ordinateur avec l'utilisation des données déposées dans le dispositif de mémoire, comportement par lequel on peut obtenir à chaque vitesse aussi bien un arrêt sûr de l'entraînement qu'un déplacement de l'entraînement dans une position de sécurité prédéfinie.

13. Dispositif de commande électronique selon l'une des revendications précédentes, **caractérisé en ce que** le dispositif de commande est disposé dans un unique boîtier, sur le côté inférieur duquel se trouvent des dispositifs de refroidissement et de fixation pour la fixation du dispositif de commande.

14. Dispositif de commande électronique selon l'une des revendications précédentes, **caractérisé par** un moyen pour l'inversion du sens de rotation de l'entraînement en réaction à un signal de l'ensemble d'ordinateur, qui déclenche le signal après l'identification du dépassement ou de la non-atteinte d'un seuil de puissance réelle prédéfini.

15. Dispositif de commande électronique selon l'une des revendications précédentes, **caractérisé en ce que** l'ensemble d'ordinateur prend en compte lors de la comparaison également une temporisation prédéfinie et/ou un écart maximal autorisé et prédéfini.
